# EUROPÄISCHE PATENTSCHRIFT

(11) **EP 0 979 143 B1**
(45) Veröffentlichungstag und Bekanntmachung des Hinweises auf die Patenterteilung: **15.12.2004**
(21) Anmeldenummer: 98919178.8
(22) Anmeldetag: 27.03.1998
(51) Int. Cl.: B01J 20/24, C02F 1/28

(54) **BIOSORBENTIEN FÜR METALLIONEN UND VERFAHREN ZU IHRER HERSTELLUNG**
BIOSORPTION AGENTS FOR METAL IONS AND METHOD FOR THE PRODUCTION THEREOF
AGENTS DE BIOSORPTION POUR IONS METALLIQUES ET PROCEDE PERMETTANT DE LES PREPARER

(30) Priorität: 30.04.1997 DE 19718452
(43) Veröffentlichungstag der Anmeldung: 16.02.2000
(73) Patentinhaber: Fraunhofer-Gesellschaft zur Förderung der angewandten Forschung e.V., 80686 München (DE)
(72) Erfinder: KÜHN, Manfred, D-65830 Kriftel (DE); WISSLER, Josef, D-61231 Bad Nauheim (DE); BRUNNER, Herwig, D-70569 Stuttgart (DE)
(74) Vertreter: Reitzle, Helmut, Dr.
(86) Internationale Anmeldenummer: PCT/EP1998/001827
(87) Internationale Veröffentlichungsnummer: WO 1998/048933

(56) Entgegenhaltungen:
- WO-A-95/02452
- DE-A- 4 203 928
- DE-A- 4 239 749
- DE-A- 19 603 786
- FR-A- 2 205 805
- MARSHALL W E ET AL: "AGRICULTURAL BY-PRODUCTS AS METAL ADSORBENTS: SORPTION PROPERTIES AND RESISTANCE TO MECHANICAL ABRASION" JOURNAL OF CHEMICAL TECHNOLOGY AND BIOTECHNOLOGY (INTERNATIONAL JOURNAL OF BIOTECHNICAL AND CHEMICAL PROCESSES), Bd. 66, Nr. 2, Juni 1996, Seiten 192-198, XP000625195

## Beschreibung

Die Erfindung betrifft ein Verfahren zur Herstellung von Biosorbentien zur Bindung von Metallionen aus Reststoffen der Nahrungsmittelindustrie.

Die Biosorption von Schwermetallionen an Materialien biologisch-natürlicher Herkunft - auch Biosorbentien genannt - findet erhebliches praktisches Interesse wegen der leichten und preiswerten Zugänglichkeit, einfachen Modifizierbarkeit, der teilweise hohen Bindungskapazität gegenüber Metallionen und ihrer Bioabbaubarkeit. Diese Biomasse fällt z.B. als Nebenprodukt bzw. Rest- oder Abfallstoff bei large-scale-Fermentationen, in Form von metallbindenden Algen in den Weltmeeren, sowie in der Land-, Forst-, Papier- und Nahrungsmittelwirtschaft an. Der Einsatz dieser in großen Mengen und auch billig zur Verfügung stehenden Biomassen als metallimmobilisierende Biosorbentien ist eine attraktive Alternative zur Entfernung von Schwermetallen aus der Umwelt anstelle der herkömmlichen Ionenaustauscher-Chromatographie mit synthetischen Polymeren oder anorganischen Materialien.

Die bei industriellen Prozessen der large-scale-Fermentationen anfallenden Biomassen zeigen in einigen Fällen eine sehr hohe Metallbindungskapazität, die z.B. bei einigen Pilzen bis zu 25 % ihrer Biomasse und bei bestimmten Braunalgen mariner Herkunft sogar bis zu 30 % ihrer Biomasse betragen kann (Biotechnol.Prog. 1995, 11, 235-250). Im allgemeinen sind solch hohe Bindungsraten nicht die Regel. Weil aber die industriell gewonnene mikrobielle Biomasse und die durch Abernten erhältlichen Biomassen der Weltmeere sehr preiswert sind als Ausgangsmaterial für die Herstellung schwermetallionenbindender Biosorbentien, werden wirkungsvollere Biosorbentien durch chemische Modifikationen dieser Biomasse hergestellt.

Kohlenhydrathaltige Rohstoffe sowie Nebenprodukte bzw. Rest- oder Abfallstoffe der Forst- und Papierwirtschaft werden ebenfalls als potentielle Biosorbentien für Metallionen eingeschätzt. Mehr noch als bei den Bioabsorbern auf der Basis mikrobieller Herkunft müssen diese kohlenhydrathaltigen Biomassen jedoch erst noch chemisch modifiziert werden, um effektive Biosorbentien zu ergeben. Die Modifizierungsreaktionen werden dabei so gestaltet, daß die auch schon natürlich vorhandene, jedoch sehr niedrige Ionenaustauscher-Kapazität dieser Biosorbentien erhöht wird. Diese erhöhte Bindungskapazität wird vor allem erreicht durch die Einführung von Phosphatgruppen in die kohlenhydrathaltigen Biomassen aus der Forst- und Papierwirtschaft. Durch Phosphorylierung mit unterschiedlichen Phosphorylierungsmitteln werden Phosphatgruppen z.B. in Cellulose (FA-A- 2 206 977), Lignocellulose (WO 93/11196), Holzreste (JP 90-122269), Sägemehl (JP 87-267663), Papierbrei (JP 86-234543) und Stärke (JP 92-308078) kovalent gebunden. Diese Biosorbentien und die Verfahren zu ihrer Herstellung haben aber bisher keine technische Anwendung erfahren.

Aus der WO 95 02452 A ist weiterhin ein Verfahren bekannt zur Herstellung von Sorbentien bei dem Rohstoffe zerkleinert und bei erhöhter Temperatur modifiziert werden.

Im Gegensatz zu den Biosorbentien marinen und mikrobiellen Ursprunges und denen aus der Forst- und Papierindustrie wurden die Möglichkeiten der Biosorption von Metallionen an Rest- und Abfallstoffen der Land- und Nahrungsmittelwirtschaft bisher weniger untersucht oder die chemische Modifikation solcher nachwachsender Rohstoffe zur Entwicklung metallbindender Bioabsorber und ihre technische Anwendung zur Metallionenabsorption gar nicht in Betracht gezogen.

Ausgehend hiervon, ist es deshalb die Aufgabe der vorliegenden Erfindung, ein neues Verfahren zu Herstellung von Biosorbentien auf biologisch-natürlicher Basis vorzuschlagen.

Die Aufgabe wird durch die Merkmale des Anspruches 1 in gelöst.

Die Unteransprüche zeigen vorteilhafte Weiterbildungen auf.

Basis der Biosorbentien die mit dem erfindungsgemäßen Verfahren hergestellt werden sind Getreide-Mahlrückstände. Diese werden gewonnen durch den Mehlentzug aus Getreidekörnern, die in Getreidemühlen bei der Mehlherstellung in sehr großen Mengen anfallen und bisher wegen ihres hohen Kohlenhydratanteiles sowie ihres Stickstoffgehaltes von etwa 1 bis 3 %, ihres Phosphorgehaltes von unter 2 % und ihres Schwefelgehaltes von unter 0,2 % lediglich als Futtermittel verwendet werden, nicht dagegen als Ausgangsmaterial für Wertprodukte, z.B. für die Gewinnung von Biosorbentien zur Metallionenbindung. Getreide-Mahlrückstände aller Getreidearten, z.B. von Weizen, Gerste, Hafer, Roggen, Triticale, Hirse sowie Mais und Reis, können verwendet werden zur Herstellung der erfindungsgemäßen Biosorbentien.

Getreide-Mahlrückstände selbst besitzen eine - wenn auch sehr geringe - Metallbindungskapazität von unter 0,2 Milliäquivalenten pro Gramm trockenen Materials. Um die Vorteile der Getreide-Mahlrückstände als Biosorbentien voll nutzen zu können, ist es erforderlich, sie mit möglichst einfachen und billigen Methoden zu modifizieren, um höhere Bindungskapazitäten gegenüber Metallionen zu erreichen.

Die mit dem Verfahren noch der Erfindung hergestellten Biosorbentien zur Metallionenbindung zeichnen sich dadurch aus, daß sie aus in wäßrigen Systemen und/oder organischen Lösungsmitteln unlöslichen, bevorzugt sphärischen Partikeln der Getreide-Mahlrückstände, den Rückständen der vom Mehlbestandteil befreiten Getreidekörner, bestehen, deren Elementzusammensetzung aus Kohlenstoff, Wasserstoff, Sauerstoff, Stickstoff, Schwefel und Phosphor besteht, wobei die Getreidemahlrückstände so modifiziert sind, daß der Stickstoffgehalt der Biosorbentien 0 bis 20 % (vorzugsweise 4 bis 15 %), der Phosphorgehalt der Biosorbentien 0 bis 20 % (vorzugsweise 6 bis 15 %) und der Schwefelgehalt der Biosorbentien 0 bis 8 % betragen.

Erfindungsgemäß wird die Modifizierung der Getreide-Mahlrückstände durch Umsetzung der Getreide-Mahlrückstände mit Kohlensäure- oder Thionkohlensäure-Derivaten oder Gemischen beider der allgemeinen Formel (1) 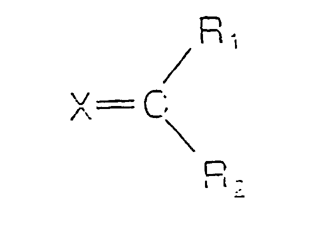 in organischen Lösungsmitteln oder wäßrigen Lösungen oder Gemischen beider bei Temperaturen von 50 °C bis 200 °C in Gegenwart einer Säure, gegebenenfalls auch ohne Säure, erhalten.

In den Verbindungen der allgemeinen Formel (1) bedeuten X = O,S,NH;
R1 = NH₂,NH-NH₂; und
R2 = NH₂,NH-NH₂,NH-CO-NH₂,N(CH₃)-CH₂-COOH, NH-(CH₂)₃-CH(NH₂)-COOH

Die Behandlungsdauer mit der Verbindung der allgemeinen Formel (1) erfolgt im Bereich von 1 Stunde bis 20 Stunden bei einer Temperatur von 50 bis 200 °C liegen.

Die Modifizierung erfolgt dabei in einem organischen Lösungsmittel, in einer wäßrigen Lösung oder einem Gemisch daraus.

Als organische Lösungsmittel werden höhersiedende aprotische Lösungsmittel, bevorzugt Dimentylformamid oder Dimethylsulfoxid, verwendet und als wäßrige Lösungen entweder reines destilliertes Wasser oder Phosphatpuffer mit einem pH-Wert von 5,0 bis 8,0 und einer Ionenstärke im Bereich von 0,01 bis 1 Mol/l, die gegebenenfalls noch Polyphosphate und/oder deren Salze enthalten können, oder Gemische aus den genannten organischen Lösungsmitteln und wäßrigen Lösungen

Als Säuren werden Schwefelsäure und/oder Phosphorsäure und/oder Polyphosphorsäure eingesetzt.

Das Verfahren kann auch so durch geführt wurde, daß die Getreide-Mahlrückstände entweder im Lösungsmittel, welches ein Kohlensäure- oder ein Thionkohlensäure-Derivat oder Gemische beider und gegebenenfalls eine Säure gelöst enthält, suspendiert werden und die Suspensionen unter Rühren auf 100 °C bis 200 °C, vorzugsweise auf 140 °C bis 160 °C, erhitzt und bei der gewählten Reaktionstemperatur 0,5 bis 8 Stunden weiter gerührt werden, oder aber mit den in den Lösungsmitteln gelösten Verbindungen der allgemeinen Formel (1) und gegebenenfalls einer Säure zu einem dispersen teigartigen System verarbeitet werden. Dieser Teig wird 2 bis 20 Stunden, vorzugsweise 4 bis 15 Stunden, einer Temperatur von 60 °C bis 100 °C, vorzugsweise 70 °C bis 80 °C, ausgesetzt und anschließend die Modifikation der Getreide-Mahlrückstände bei Temperaturen von 120 °C bis 200 °C, vorzugsweise 140 °C bis 160 °C, im Verlaufe von 1 Stunde bis 10 Stunden, vorzugsweise 2 bis 5 Stunden, beendet, wobei in beiden Fällen die Dauer des Erwärmens von der gewählten Temperatur abhängt. Diese Inkubation kann statisch oder auch durch geeignete Vorrichtungen bewegt erfolgen.

Die Gewichtsverhältnisse der bei den Umsetzungen einzusetzenden Reaktionskomponenten ist in weiten Bereichen frei wählbar. Das Gewichtsverhältnis der Säure zum Kohlensäure- oder Thionkohlensäure-Derivat oder einem Gemisch beider wird auf 0,1 : 2 bis 0,1 : 20, vorzugsweise 1 : 2 bis 1 : 6, eingestellt, gegebenenfalls unter Zusatz von 0,1 bis 5 Gewichtsteilen, vorzugsweise von 0,5 bis 2 Gewichtsteilen eines Polyphosphates bzw. seines Alkalisalzes, wobei es vorteilhaft ist, eine möglichst konzentrierte Lösung aus dem verwendeten Lösungsmittel und dem Kohlensäureund/oder Thionkohlensäure-Derivat oder einem Gemisch beider herzustellen.

Eine Ausführungsform des Verfahrens zur Herstellung der neuen Biosorbentien besteht darin, daß ein Gewichtsteil Phosphorsäure mit 6 Gewichtsteilen Kohlensäure- und/oder Thionkohlensäure-Derivat oder einem Gemisch beider in 100 Gewichtsteilen Dimethylformamid bei 80 °C gelöst, zu dieser Lösung 10 Gewichtsteile Getreide-Mahlrückstand addiert werden und die Modifizierung des Getreide-Mahlrückstandes entsprechend den gewählten, im Rahmen der oben beschriebenen und festgelegten Bedingungen durchgeführt wird.

Eine besonders vorteilhafte Ausführungsform zur Herstellung der erfindungsgemäßen Biosorbentien besteht darin, daß 1 Gewichtsteil Phosphorsäure und 4 Gewichtsteile Kohlensäure- und/oder Thionkohlensäure-Derivat oder ein Gemisch beider, gegebenenfalls noch 0,5 bis 2 Gewichtsteile Natriumtriphosphat, in 30 Gewichtsteilen destilliertem Wasser gelöst bzw. suspendiert werden, durch Addition von 15 Gewichtsteilen Getreide-Mahlrückständen zu dieser Lösung bzw. Suspension und gutem Durchmischen der Komponenten eine teigartige Masse hergestellt wird, diese 15 Stunden bei 75 °C gehalten wird und die Modifizierung der Getreide-Mahlrückstände gemäß der oben genannten Reaktionsbedingungen zum Abschluß gebracht wird.

Weiterhin besteht eine Ausführungsform des Verfahrens zur Herstellung der erfindungsgemäßen Biosorbentien darin, daß 0,1 Gewichtsteile Schwefelsäure und 2 Gewichtsteile einer Additionsverbindung von Phosphorsäure und Kohlensäure- und/oder Thionkohlensäure-Derivat oder ein Gemisch beider, gegebenenfalls noch 0,5 bis 2 Gewichtsteile Natriumtriphosphat, in 20 Gewichtsteilen destilliertem Wasser gelöst bzw. suspendiert werden, 1 Gewichtsteil Getreide-Mahlrückstand zu dieser Lösung addiert wird, dieses Gemisch zu einer gut durchmischten teigartigen Masse verarbeitet wird und diese - wie vorstehend beschrieben-behandelt wird.

Im Ergebnis der Herstellungsverfahren werden Biosorbentien mit sehr hoher Metallionenbindungskapazität. erhalten. Ihre typischen Austauschkapazitäten liegen im Bereich von 3 bis 6 Milliäquivalenten pro Gramm trockenen Biosorbent. Durch Variation der Konzentration der Reaktionskomponenten, der Lösungsmittel, der Reaktionstemperaturen und der Reaktionszeiten können bei Bedaf auch Biosorbentien mit niedrigeren Austauschkapazitäten als den zuvor angegebenen synthetisiert werden.

Die Aufarbeitung der Reaktionsgemische erfolgt in der Weise, daß von den Suspensionen das Lösungsmittel abgetrennt und der zurückbleibende Feststoff mit Wasser, verdünnter Salzsäure und destilliertem Wasser gewaschen wird und dann bei 100 °C getrocknet wird. Der Feststoff des vormals dispersen Systems wird in Wasser suspendiert und ebenfalls mit Wasser, verdünnter Salzsäure und destilliertem Wasser gewaschen und getrocknet.

Die mit dem Verfahren hergestellen Biosorbentien auf der Basis von Getreide-Mahlrückständen können sehr vorteilhaft zur Absorption von Metallionen, besonders aber der Ionen von Schwermetallen und Radionukliden eingesetzt werden. Sie besitzen eine wesentlich erhöhte Bindungskapazität dieser Ionen als die unmodifizierten Getreide-Mahlrückstände. Die Absorption der Metallionen ist sowohl mit dem Batchverfahren als auch mit dem Säulenverfahren möglich. Beim Batch-Verfahren werden die Biosorbentien in die metallhaltigen Lösungen, die einen pH-Wert von 4 bis 8, vorzugsweise von 4,5 bis 7,0 haben sollten, eingetragen, und die Suspension wird 0,3 Minuten bis 8 Stunden, vorzugsweise 0,5 bis 3 Stunden, gerührt. Dabei werden die Metallionen am Bioabsorber gebunden. Beim Säulenverfahren werden die Bioabsorber in eine Chromatographiesäule gefüllt, der Säuleninhalt auf einen pH-Wert, wie beim Batch-Verfahren beschrieben, gebracht und die metallhaltige Lösung mit gleichem pH-Wert kontinuierlich durch die Säule geleitet. Dabei werden die Metallionen ebenfalls an den Biosorbentien gebunden, und die Säule verläßt ein bei entsprechender Dimensionierung des Säuleninhaltes und der metallhaltigen Lösungen von den Schwermetallen entsprechend den gesetzlichen Vorgaben gereinigtes Wasser. Die metallhaltigen Bioabsorber können anschließend mit verdünnten Säuren regeneriert und einer Wiederverwendung zur Metallionenbindung zugeführt werden.

Ein besonderer Vorteil der Biosorbentien ist darin zu sehen, daß die in der Nahrungsmittelwirtschaft anfallenden Rest- und Abfallstoffe als Biosorbentien genutzt werden können. Besonders die in Getreidemühlen als Reststoff anfallenden Getreide-Mahlrückstände, worunter die vom Mehlbestandteil befreiten Getreidekornrückstände verstanden werden, kommen dafür in Betracht. Diese zeichnen sich durch Besonderheiten aus, die sie als besonders geeignet zur Entwicklung von Biosorbentien erscheinen lassen. Sie sind in wäßrigen und organischen Lösungsmitteln unlöslich und ändern bei Wechsel des pH-Wertes oder der Ionenstärke ihr Volumen nur unbedeutend. Weiterhin sind sie hydrophil und deshalb mit Wasser gut benetzbar, so daß sie für ein Arbeiten in wäßrigen Medien ohne Einschränkung geeignet sind. Aufgrund dieser physikalischen Eigenschaften sind sie für die kontinuierliche Anwendung der Metallionenabsorption in Säulen zur Durchflußchromatographie trotz ihrer bioorganischen Natur bestens geeignet.

Die nach dem erfindungsgemäßen Verfahren erhaltenen Biosorbentien zeigen eine wesentlich verbesserte Bindungskapazität gegenüber Metallionen, besonders aber gegenüber Schwermetallionen und Ionen der Radionuklide als die unmodifizierten Getreide-Mahlrückstände oder die Biosorbentien marinen oder mikrobiellen Ursprungs. Aufgrund der standardisierten Herstellungsverfahren ergeben sich für sie reproduzierbare Bindungsraten für Metallionen, was bei Algen und Mikroorganismen nicht gewährleistet ist. Hier hängt die Metallbindungsrate wesentlich von den Wachstumsbedingungen ab. Die erfindungsgemäßen Biosorbentien binden sowohl einwertige als auch höherwertige Metallionen und sind in ihrem Bindungsvermögen gegenüber Schwermetallionen und Radionukliden den herkömmlichen Absorbern organischen oder anorganischen Ursprungs überlegen.

Die zur Herstellung der erfindungsgemäßen Biosorbentien benötigten Getreide-Mahlrückstände sind einfach zugänglich, als Reststoff der Getreidevermahlung billig und mit preiswerten Chemikalien einfach modifizierbar.

Das erfindugnsgemäße Herstellungsverfahren kann auch so durchgeführt werden, daß keine aprotischen, organischen, in vielen Fällen toxischen und umweltbelastenden Lösungsmittel eingesetzt werden müssen. Die metallbeladenen Biosorbentien sind leicht mit verdünnten Säuren regenerierbar und können anschließend einer Wiederverwendung zur Metallabsorption zugeführt werden. Als Entsorgungsmethode unbrauchbar gewordener oder nicht mehr vollständig regenerierbarer Biosorbentien kommt für diese Materialien aufgrund ihrer bioorganischen Natur vorteilhafterweise eine Verbrennung in Betracht, so daß als Rest nur ein geringes Volumen anorganischen Materials übrigbleibt. Nach der Beladung mit besonders problembehafteten Metallionen, z.B. Radionukliden, ist ihre Entsorgung im Vergleich zu herkömmlichen Absorbern für Radionuklide auf der Basis synthetisch-organischer Polymere oder anorganischer Absorber wesentlich einfacher. Die erfindungsgemäßen Bioabsorber sind zusätzlich biologisch abbaubar, so daß nach der Bindung der Radionuklide und der damit verbundenen Entfernung der Radionuklide z.B. aus der Umwelt durch eine Kompostierung oder anaerobe Vergärung unter Gewinnung von Methan der radionuklidbeladenen Bioabsorber wesentlich weniger Sondermüll anfällt.

Die Bioabsorber aus nachwachsenden Rohstoffen, vorzugsweise Getreide-Mahlrückständen, zur Metallionenabsorption können zur Metallionen-Eliminierung aus Sickerwässern, wäßrigen Lösungen und Extrakten von Böden, Schlämmen, Industrierückständen und kommunalen Abfällen sowie Prozeßwässern und Abwässern energieerzeugender, stoffwandelnder, kommunaler und landwirtschaftlicher Unternehmen eingesetzt werden.

Die Erfindung wird nachfolgend durch sechs Beispiele näher erläutert.

### Beispiel 1 (Vergleichsbeispiel)

4 g Harnstoffphosphat und 1 ml konzentrierte Schwefelsäure werden bei 60 °C in 100 ml Dimethylformamid gelöst, und zur Lösung werden 10 g getrockneter Getreide-Mahlrückstand addiert. Unter Rühren wird die Suspension langsam auf 145 °C erwärmt und bei dieser Temperatur 3 Stunden weiter gerührt. Das feste Material wird abfiltriert, mit Wasser, 0,1 n Salzsäure, destilliertem Wasser gewaschen und bei 100 °C getrocknet.

Dieser Bioabsorber hat einen Stickstoffgehalt von 3,85 %, einen Schwefelgehalt von 0,32 % und einen Phosphorgehalt von 3,15 %. 1 g trockener Bioabsorber wird in 25 ml destilliertem Wasser suspendiert, in eine Chromatographiesäule gefüllt und der Säuleninhalt auf einen pH-Wert von 5,0 eingestellt. Eine Kupfersulfatlösung mit gleichem pH-Wert wird durch die Säule geleitet, um die Bindungskapazität des Bioabsorbers zu ermitteln. Sie beträgt 46 mg Cu pro Gramm Bioabsorber.

### Beispiel 2 (Vergleichsbeispiel)

Ein Gemisch aus 4 g Harnstoffphosphat und 2 g Natriumtriphosphat wird bei 80 °C in 30 ml Wasser gelöst, 5 g Getreide-Mahlrückstand werden addiert, und durch gutes Durchmischen wird eine teigartige Masse hergestellt. Diese wird zunächst 15 Stunden bei 75 °C gehalten und danach 2 Stunden bei 150 °C. Danach wird die dunkle Masse in 150 ml Wasser aufgenommen, abfiltriert und mehrmals mit Wasser, 0,1 n Salzsäure und destilliertem Wasser gewaschen und bei 100 °C getrocknet.

Dieser Bioabsorber hat einen Stickstoffgehalt von 3,64 %, einen Schwefelgehalt von 0,22 % und einen Phosphorgehalt von 4,11 %. Die Bindungskapazität wird wie im Beispiel 1 beschrieben bestimmt. Sie beträgt 52 mg Cu pro Gramm Bioabsorber bzw. 48 mg Co pro Gramm Bioabsorber.

### Beispiel 3

10 g Thioharnstoff und 30 g Harnstoff werden zusammen mit 15 g ortho-Phosphorsäure bei 75 °C in 50 ml Dimethylformamid gelöst. Zu dieser Lösung werden 15 g Getreide-Mahlrückstand addiert, und durch gutes Durchmischen wird daraus eine teigartige Masse erzeugt. Diese wird zunächst 15 Stunden bei 75 °C gehalten und danach 2 Stunden bei 150 °C. Danach wird die dunkle Masse in 150 ml Wasser aufgenommen, abfiltriert, in einem Lösungsmittelgemisch aus 100 ml Äthanol und

20 ml 0,1 n Natronlauge resuspendiert und 1 Stunde bei 80 °C gerührt. Nach dem erneuten Abfiltrieren wird der Feststoff mehrmals mit Wasser, 0,1 n Salzsäure und destilliertem Wasser gewaschen und bei 100 °C getrocknet.

Dieser Bioabsorber hat einen Stickstoffgehalt von 5,17 %, einen Schwefelgehalt von 2,85 % und einen Phosphorgehalt von 7,55 %. Die Bindungskapazität wird wie im Beispiel 1 beschrieben bestimmt. Sie beträgt 75 mg Cu pro Gramm Bioabsorber bzw. 210 mg Pb pro Gramm Bioabsorber.

### Beispiel 4

30 g Harnstoff und 15 g ortho-Phosphorsäure werden bei 75 °C in 30 ml Wasser gelöst. Zu dieser Lösung werden 15 g Getreide-Mahlrückstand addiert, und durch gutes Durchmischen wird daraus eine teigartige Masse erzeugt. Diese wird zunächst 15 Stunden bei 75 °C gehalten und danach 2 Stunden bei 150 °C. Danach wird die dunkle Masse in 150 ml Wasser aufgenommen, abfiltriert und mehrmals mit Wasser, 0,1 n Salzsäure und destilliertem Wasser gewaschen und bei 100 °C getrocknet.

Dieser Bioabsorber hat einen Stickstoffgehalt von 8,19 %, einen Schwefelgehalt von 0,38 % und einen Phosphorgehalt von 14,02 %. Die Bindungskapazität wird wie im Beispiel 1 beschrieben bestimmt. Sie beträgt pro Gramm Bioabsorber
145 mg Cu, 245 mg Ag, 165 mg Ni, 178 mg Co, 122 mg Cr, 117 mg Mo, 150 mg Zn, 132 mg Mn, 385 mg Pb, 324 mg Hg, 275 mg Cd, 436 mg U, 356 mg Cs.

### Beispiel 5 (Vergleichsbeispiel)

20 g Semicarbazidhydrochlorid und 10 g Polyphosphorsäure werden bei 80 °C in 30 ml Wasser gelöst. Zur noch warmen Lösung werden 10 g Getreide-Mahlrückstand addiert, und durch gutes Durchmischen wird daraus eine teigartige Masse erzeugt. Diese wird zunächst 15 Stunden bei 75 °C gehalten und danach 4 Stunden bei 150 °C. Danach wird die dunkle Masse in 150 ml Wasser aufgenommen, abfiltriert und mehrmals mit Wasser, 0,1 n Salzsäure und destilliertem Wasser gewaschen und bei 100 °C getrocknet.

Dieser Bioabsorber hat einen Stickstoffgehalt von 19,10 %, einen Schwefelgehalt von 0,18 % und einen Phosphorgehalt von 3,86 %. Die Bindungskapazität wird wie im Beispiel 1 beschrieben bestimmt. Sie beträgt 85 mg Cu, 110 mg Ag, 65 mg Co, 201 mg Hg, 98 mg Cd oder 197 mg U pro Gramm Bioabsorber.

### Beispiel 6

20 g Aminoguanidinhydrogencarbonat, 2 g Natriumtriphosphat und 10 g ortho-Phosphorsäure werden in 30 ml 0,1 m Phosphatpuffer vom pH-Wert 7,0 gelöst, und der pH-Wert der Lösung wird mit 2 n Natronlauge wieder auf pH-Wert 7,0 gebracht. Zu der Lösung werden 15 g Getreide-Mahlrückstand addiert, und durch gutes Durchmischen wird daraus eine teigartige Masse erzeugt. Diese wird zunächst 10 Stunden bei 75 °C gehalten und danach 5 Stunden bei 140 °C. Danach wird die dunkle Masse in 150 ml Wasser aufgenommen, abfiltriert und mehrmals mit Wasser, 0,1 n Salzsäure und destilliertem Wasser gewaschen und bei 100 °C getrocknet.

Dieser Bioabsorber hat einen Stickstoffgehalt von 4,43 %, einen Schwefelgehalt von 0,56 % und einen Phosphorgehalt von 4,81 %. Die Bindungskapazität wird wie im Beispiel 1 beschrieben bestimmt. Sie beträgt 55 mg Cu, 48 mg Zn, 162 mg Pb, 74 mg Cd oder 148 mg Hg pro Gramm Bioabsorber.

## Patentansprüche

1. Verfahren zur Herstellung von Biosorbentien für Metallionen auf biologisch-natürlicher Basis, **dadurch gekennzeichnet, daß** die Getreidemahlrückstände in Suspension in wäßriger Lösung und/oder organischen Lösungsmitteln gerührt und bei 50 bis 200 °C über eine Zeitspanne von 1 bis 20 Stunden mit einer Verbindung der allgemeinen Formel I, worin die allgemeine Formel I wie folgt, definiert ist: 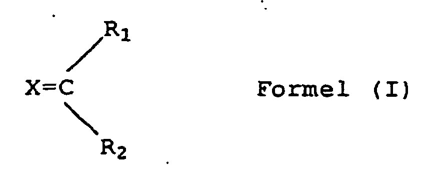 worin
X = O, S oder NH
R1 = NH₂, NH-NH₂ und
R2 = NH₂, NH-NH₂, NH-CO-NH₂, N(HC₃)-CH₂-COOH, NH- (CH₂)₃-CH(NH₂)-COOH
bedeutet, mit einer Säure behandelt werden so daß der Stickstoffgehalt im Bereich von 4 bis 15 %, der Phosphorgehalt im Bereich von 6 bis 15 % und der Schwefelgehalt bis 8 % beträgt.

2. Verfahren nach Anspruch 1,
**dadurch gekennzeichnet, daß** als Getreidekörner Weizen-, Gerste-, Hafer-, Roggen-, Triticale-, Hirse-, Mais- und Reiskörner eingesetzt werden.

3. Verfahren nach Anspruch 1 oder 2,
**dadurch gekennzeichnet, daß** bei 100 bis 200 °C behandelt wird.

4. Verfahren nach einem der Ansprüche 1 bis 5,
**dadurch gekennzeichnet, daß** die Behandlung bei 140 bis 160 °C erfolgt.

5. Verfahren nach mindestens einem der Ansprüche 1 bis 4,
**dadurch gekennzeichnet, daß** die Getreidemahlrückstände mit der Verbindung der allgemeinen Formel (I) in einem wäßrigen Lösungsmittel und/oder organischen Lösungsmittel zu einem dispersen, teigartigen Brei verarbeitet werden, daß dieser Brei 2 bis 20 Stunden bei einer Temperatur von 60 bis 100 °C belassen wird, und daß anschließend die Modifizierung der Getreidemahlrückstände bei Temperaturen von 120 bis 200 °C im Verlaufe von 1 bis 10 Stunden erfolgt.

6. Verfahren nach Anspruch 5,
**dadurch gekennzeichnet, daß** der teigartige Brei bei einer Temperatur von 70 bis 80 °C über eine Zeitspanne von 4 bis 15 Stunden belassen wird, und daß die Modifizierung bei 140 bis 160 °C über 2 bis 5 Stunden vorgenommen wird.

7. Verfahren nach mindestens einem der Ansprüche 1 bis 6,
**dadurch gekennzeichnet, daß** das Gewichtsverhältnis der Säure zu der Verbindung der allgemeinen Formel (I) auf 0,1:2 bis 0,1:20 eingestellt wird.

8. Verfahren nach Anspruch 7,
**dadurch gekennzeichnet, daß** das Gewichtsverhältnis auf 1:2 bis 1:6 eingestellt wird.

9. Verfahren nach mindestens einem der Ansprüche 1 bis 8,
**dadurch gekennzeichnet, daß** bei der Behandlung ein Polyphosphat bzw. eines seiner Alkalisalze zugesetzt wird.

## Claims

1. A method of producing metal-ion biosorbents on a natural biological basis, **characterised in that** the cereal-meal residues in suspension in aqueous solution and/or organic solvents are stirred and at 50 to 200 ° C for a period of 1 to 20 hours, together with a compound of the general formula I, general formula I being defined as follows: 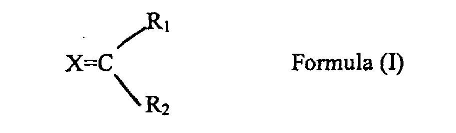 wherein
X = O, S or NH
R₁ = NH₂, NH-NH₂, and
R₂ = NH₂, NH-NH₂, NH-CO-NH₂, N(HC₃)-CH₂-COOH, NH-(CH₂)₃-CH(NH₂)-COOH,
are treated with an acid in such a way that the nitrogen content has a value within the range 4 to 15%, the phosphorus content a value within the range 6 to 15%, and the sulfur content a value of up to 8%.

2. A method according to Claim 1,
**characterised in that** wheat grains, barley grains, oat grains, rye grains, triticale grains, millet grains, corn grains and rice grains are used as the cereal grains.

3. A method according to Claim 1 or 2,
**characterised in that** the treatment is carried out at 100 to 200 °C.

4. A method according to any one of Claims 1 to 5,
**characterised in that** the treatment takes place at 140 to 160 °C.

5. A method according to at least one of Claims 1 to 4,
**characterised in that** the cereal-meal residues are processed, together with the compound of the general formula (I), in an aqueous solvent and/or organic solvent to form a disperse, doughy paste, **in that** this paste is allowed to stand for 2 to 20 h at a temperature of 60 to 100 °C, and **in that** the modification of the cereal-meal residues takes place at temperatures of 120 to 200 °C in the course of 1 to 10 h.

6. A method according to Claim 5,
**characterised in that** the doughy paste is allowed to stand at a temperature of 70 to 80 °C for a period of 4 to 15 h, and **in that** the modification is performed at 140 to 160 °C over 2 to 5 h.

7. A method according to at least one of Claims 1 to 6,
**characterised in that** the weight ratio of the acid to the compound of the general formula (I) is set at 0.1 : 2 to 0.1 : 20.

8. A method according to Claim 7,
**characterised in that** the weight ratio is set at 1 : 2 to 1 : 6.

9. A method according to at least one of Claims 1 to 8,
**characterised in that** a polyphosphate or one of its alkali salts is added during the treatment.

## Revendications

1. Procédé pour la préparation d'agents de biosorption pour ions métalliques, à base biologique-naturelle, **caractérisé en ce que** les résidus de broyage de céréales sont agités en suspension dans une solution aqueuse et/ou des solvants organiques et traités à une température de 50 à 200°C, pendant une durée de 1 à 20 heures, en présence d'un acide, par un composé de formule générale I, la formule générale I étant définie comme suit : 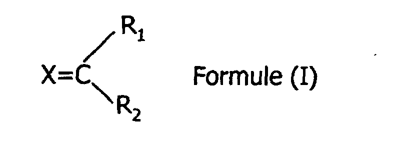 dans laquelle
X = O, S ou NH,
R₁ = NH₂, NH-NH₂ et
R₂ = NH₂, NH-NH₂, NH-CO-NH₂, N(CH₃)-CH₂-COOH, NH-(CH₂)₃-CH-(NH₂)-COOH
de sorte que la teneur en azote se situe dans la plage allant de 4 à 15 %, la teneur en phosphore se situe dans la plage allant de 6 à 15 % et la teneur en soufre va jusqu'à 8 %.

2. Procédé selon la revendication 1, **caractérisé en ce qu'**on utilise en tant que grains de céréales, des grains de blé, d'orge, d'avoine, de seigle, de triticale, de mil, de maïs et de riz.

3. Procédé selon la revendication 1 ou 2, **caractérisé en ce qu'**on effectue le traitement à une température de 100 à 200°C.

4. Procédé selon l'une quelconque des revendications 1 à 5, **caractérisé en ce qu'**on effectue le traitement à une température de 140 à 160°C.

5. Procédé selon au moins l'une des revendications 1 à 4, **caractérisé en ce que** les résidus de broyage de céréales sont transformés, avec le composé de formule générale (I) dans un solvant aqueux et/ou un solvant organique, en une bouillie en dispersion pâteuse, **en ce que** cette bouillie est maintenue pendant 2 à 20 heures à une température de 60 à 100°C et **en ce que** la modification des résidus de broyage de céréales est ensuite effectuée pendant 1 à 10 heures à des températures de 120 à 200°C.

6. Procédé selon la revendication 5, **caractérisé en ce que** la bouillie pâteuse est maintenue pendant une durée de 4 à 15 heures à une température de 70 à 80°C et **en ce que** la modification est effectuée pendant 2 à 5 heures à une température de 140 à 160°C.

7. Procédé selon au moins l'une des revendications 1 à 6, **caractérisé en ce que** le rapport pondéral de l'acide au composé de formule générale (I) est ajusté dans la plage allant de 0,1:2 à 0,1:20.

8. Procédé selon la revendication 7, **caractérisé en ce que** le rapport pondéral est ajusté dans la plage allant de 1:2 à 1:6.

9. Procédé selon au moins l'une des revendications 1 à 8, **caractérisé en ce que** lors du traitement on ajoute un polyphosphate ou un de ses sels alcalins.
